**Europäisches Patentamt**

**European Patent Office**

**Office européen des brevets**

(11) Veröffentlichungsnummer: **0 310 833**
**A1**

## (12) EUROPÄISCHE PATENTANMELDUNG

(21) Anmeldenummer: **88115104.7**

(22) Anmeldetag: **15.09.88**

(51) Int. Cl.⁴: **B65G 47/14**

(30) Priorität: **05.10.87 DE 3733589**

(43) Veröffentlichungstag der Anmeldung:
**12.04.89 Patentblatt 89/15**

(84) Benannte Vertragsstaaten:
**CH DE FR GB IT LI**

(71) Anmelder: **ROBERT BOSCH GMBH**
**Postfach 10 60 50**
**D-7000 Stuttgart 10(DE)**

(72) Erfinder: **Maurer, Werner**
**Jahnstrasse 12**
**D-8970 Immenstadt(DE)**
Erfinder: **Roos, Werner**
**Bolgenstrasse 14**
**D-8972 Sonthofen(DE)**

(54) **Verfahren zum Vereinzeln von Wirrteilen.**

(57) Es wird ein Verfahren zum Vereinzeln von Wirrteilen, insbesondere von Schraubenfedern vorgeschlagen, deren Länge größer ist als ihr Durchmesser. Verfahrensgemäß werden die Wirrteile in einen Arbeitsspalt (6, 45) eingebracht, welcher durch jeweils zwei einander gegenüberliegende und relativ zueinander bewegbare Flächen (2, 3 bzw. 41, 42) mit zumindest ähnlichen Oberflächeneigenschaften gebildet wird. Der Abstand der Flächen (2, 3 bzw. 41, 42) ist durch den größten Einzeldurchmesser eines Einzelteils (1) vorgegeben. Die Relativbewegung der Flächen (2, 3 bzw. 41, 42) wird durch Haftreibung und Gleitreibung auf die Teile (1) übertragen und veranlaßt diese zu eine Vereinzelug herbeiführenden Wälzbewegung.

FIG. 1

## Verfahren zum Vereinzeln von Wirrteilen

Stand der Technik

Die Erfindung geht aus von einem Verfahren zum Vereinzeln von Wirrteilen, insbesondere von Schraubenfedern nach der Gattung des Hauptanspruchs. Durch die EP-PS 0 016 776 ist eine Vorrichtung zum Entwirren von verhängenden Teilen bekanntgeworden, die eine etwa waagerecht angeordnete Entwirrplatte hat, auf welche die verhängenden Teile aufgebracht werden. Die Platte ist mit einer Vibratoreinrichtung gekoppelt, deren Frequenz und die Amplitude der Auf- und Abwärtsbewegung veränderbar ist. Zum Vereinzeln der Teile wird ein "Hub-Pralleffekt" ausgenutzt. Diese Vorrichtung arbeitet nicht in allen Fällen zufriedenstellend, insbesondere läßt der Wirkungsgrad dann zu wünschen übrig, wenn Schraubenfedern vereinzelt werden sollen, deren Windungszwischenräume geringfügig kleiner sind als der Durchmesser des Federdrahts und die demzufolge durch höhere Klemmkräfte zusammengehalten sein können.

Die DD-PS 29 630 beschreibt ein Verfahren zum Entwirren von Schraubenfedern aus einer ungeordneten Menge solcher zu Schraubenfederbündeln zusammenhängenden oder ineinander verdrillten Federn, wobei den Schraubenfederbündeln eine kinetische Energie verliehen wird, mit deren Hilfe diese gegen eine etwa senkrecht zu deren Bewegungsrich tung vorgesehenen Ebene geschleudert und die einzelnen Schraubenfedern in einem in der Nähe dieser Ebene in Richtung der wirksamen Schwerkraft aufgestellten, als Abgabestelle dienenden Behälter gesammelt werden. Bei Vorrichtungen, die nach diesem Verfahren arbeiten, besteht die Gefahr der sogenannten Rückverwirrung. Hierunter versteht man die Tatsache, daß die durch den Aufprall auf die Ebene bereits entwirrten Teile sich wieder rückverwirren. Es hat sich gezeigt, daß die Rückverwirrung bei Zentrifugal- oder Trommelvereinzelern relativ groß ist, was sich naturgemäß negativ auf den gesamten Entwirrvorgang auswirkt. ·

Schließlich ist durch die US-A-4 078 994 eine Vorrichtung zum Entwirren von verhängenden Teilen bekannt geworden, welche an ihrem Boden eine Siebplatte besitzt. Die Vorrichtung bedient sich zur Teilevereinzelung einer Siebtrennung. Die Siebplatte wird durch eine Vielzahl nahe beieinander angeordneter, paralleler Stäbe gebildet. Die Siebwirkung der vertikalen Auf- und Abwärtsbewegungen ausgesetzten Siebplatte besteht darin, daß Teile unterschiedlicher Größe voneinander getrennt werden. Da schon vereinzelte Teile kleiner sind als miteinander verhakte Teilebündel können die vereinzelten bzw. entwirrten Teile durch den Siebboden hindurch nach unten fallen.

In der praktischen Anwendung hat sich die bekannte Vorrichtung jedoch in mehrfacher Hinsicht als nachteilig erwiesen. Beim Durchtritt durch das Sieb können sich vereinzelte Teile leicht zwischen benachbarten Stäben verklemmen und dort hängen bleiben. Dies hat zur Folge, daß die angestrebte Siebwirkung beeinträchtigt wird, denn wenn mehrere Teile verklemmt sind, verringert sich die zur Verfügung stehende Siebfläche. Außerdem können sich zwischen den Stäben eingeklemmte Teile mit anderen, gerade vereinzelten Teilen wieder verhaken. Somit tritt dann gerade das Gegenteil dessen ein, was ursprünglich angestrebt wird. Die Einsatzmöglichkeiten sowie die Variationsmöglichkeiten zur Anpassung an unterschiedliche Größen der zu vereinzelnden Teile sind stark eingeschränkt bzw. nur umständlich zu verwirklichen, denn Teile anderer Form und Größe erfordern zum vereinzeln nach dem Prinzip der Siebtrennung auch unterschiedliche Siebgrößen.

Vorteile der Erfindung

Das erfindungsgemäße Verfahren mit den kennzeichnenden Merkmalen des Hauptanspruchs hat demgegenüber den Vorteil, daß die Vereinzelung von Wirrteilen mit unterschiedlichen Außenkonturen mit einem hohen Wirkungsgrad bei schonender Behandlung des Wirrgutes möglich ist. Das Verfahren eignet sich besonders zur Entwirrung von konischen oder zylindrischen Schraubenfedern, wobei der Verfahrensablauf mit einfachen und preiswerten Konstruktionen erreicht werden kann. Die Erfindung beschreitet zur Vereinzelung der Wirrteile einen neuartigen Weg, indem sie die miteinander verhängenden oder ineinander verdrillten Teile durch die einen Arbeitsspalt bildenden Flächen unter anderem zu Dreh- bzw. Wälzbewegungen veranlaßt, wodurch ineinander gedrehte Teile auseinanderrollen. Der durch den Außendurchmesser der Teile vorgegebene Abstand der Kontaktflächen voneinander verhindert ein erneutes Verwirren.

In den Unteransprüchen sind eine Reihe vorteilhafter Vorrichtungen zur Durchführung des im Hauptanspruch angegebenen Verfahrens aufgeführt, die sich durch besondere bauliche Einfachheit, einen hohen Wirkungsgrad, besonders schonende Behandlung der Teile und dergleichen mehr auszeichnen.

Zeichnung

Zwei Ausführungsbeispiele der Erfindung sind in der Zeichnung dargestellt und in der nachfolgenden Beschreibung näher erläutert. Es zeigen Figur 1 eine vereinfacht dargestellte, teilweise im Schnitt gezeichnete erste Ausführungsform der Erfindung, Figur 2 eine vereinfachte Seitenansicht einer anderen Ausführungsform, Figuren 3A bis 3F Darstellungen der Federn und der durch Haft- und Gleitreibung der Reibflächen auf sie übertragenen Kräfte.

Beschreibung der Ausführungsbeispiele

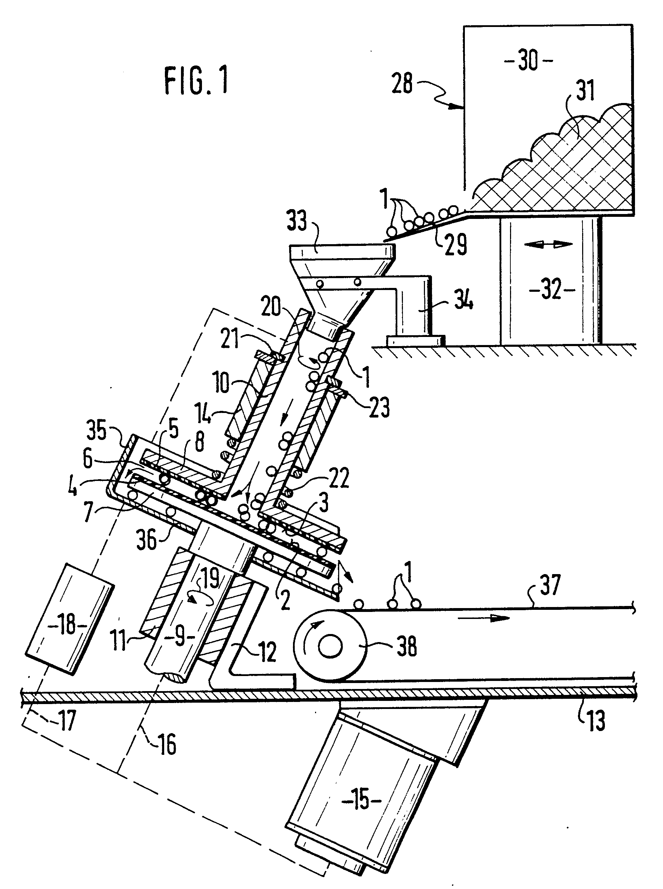

Die in Figur 1 dargestellte Vorrichtung zum Vereinzeln von Schraubenfedern 1 hat zwei parallele Flächen 2, 3 mit zumindest annähernd gleichen Oberflächeneigenschaften. Der Abstand der Flächen 2, 3 voneinander ist durch den jeweils größten Außendurchmesser der eingebrachten Schraubenfedern 1 vorgegeben. Die Länge der Federn ist dabei größer als ihr Durchmesser. Die Oberflächen 2, 3 werden durch Beläge 4, 5 mit hohen Reibungskoeffizienten, beispielsweise aus Gummi oder einem geeigneten Kunststoff, gebildet.

Die Flächen 2, 3 führen Relativbewegungen zueinander aus, welche durch Haftreibung auf die dazwischen befindlichen Federn 1 übertragen werden und diese zu einer Vereinzelung herbeiführenden Wälzbewegungen veranlassen.

Der durch den Abstand der planparallelen Fläche 2, 3 voneinander gebildete Arbeitsspalt zur Aufnahme der Federn 1 ist mit 6 bezeichnet. Die Beläge 4, 5 sind an den einander zugekehrten, planparallelen Flächen zweier Platten 7, 8 angebracht. Diese Platten 7, 8 sind beim Ausführungsbeispiel nach Figur 1 als koaxial gelagerte, rotierende Scheiben oder Rotationskörper ausgebildet. Jede Scheibe hat eine Welle 9 bzw. 10. Die Welle 9 der unteren Scheibe 7 ist in einer Buchse 11 gelagert, welche mittels eines Winkelstücks 12 auf einem Tragegestell mit Tischplatte 13 befestigt ist. Die Lagerbuchse für die Hohlwelle 10 der oberen Scheibe 8 trägt die Bezugszahl 14. Sie kann gleichfalls an der Tischplatte 13 befestigt sein und gestattet der Welle 10 außer der Rotation Bewegungen vorgegebener Größe in axialer Richtung.

Angetrieben werden die beiden Scheiben 7, 8 durch einen an der Unterseite der Tischplatte 13 angebrachten Elektromotor 15 über zwei durch gestrichelte Linien angedeutete Getriebezüge 16, 17. Der zur Hohlwelle 10 führende Getriebezug 17 enthält ein Drehrichtungs-Umkehrgetriebe 18, das bewirkt, daß die beiden Wellen mit ihren Scheiben entgegengesetzte Drehrichtung haben (Pfeile 19 und 20).

Auf die Welle 10 ist eine Druckfeder 22 aufgeschoben. Das eine Ende dieser Feder stützt sich an der unteren Stirnfläche der Lagerbuchse 14 ab. Das andere Federende liegt an der Platte 8 an. Die Feder 22 legt die axial bewegliche Hohlwelle 10 mit einem in ihr verankerten Bund 21 an eine Einstellscheibe 23 an, mit der sich die Größe des Arbeitsspalts 6 optimieren läßt. In der von der Scheibe 23 vorgegebenen Axialstellung der Welle 10 ist der Abstand der Reibflächen 2, 3 voneinander geringfügig kleiner als der größte Außendurchmesser der Federn 1.

In Figur 1 ist neben der beschriebenen Vereinzelungsvorrichtung ein Bunker 28 vorgesehen, der mit Ausnahme einer in eine schräg nach unten gerichtete Förderrinne 29 mündende Öffnung allseitig durch eine Seitenwand 30 abgeschlossen, aber nach oben hin offen ist. Der Bunker 28 bildet einen Speicher für das aus Federn 1 bestehende Haufwerk 31. Der Bunker kann auf einen Linearförderer 32 aufgesetzt sein, so daß das in seiner Geometrie festgelegte Haufwerk 31 taktweise auf die Förderrine 29 vorgeschoben wird. Die Rinne 29 endet über einem Trichter 33, dessen unteres Ende von der Hohlwelle 10 umschlossen ist. Der Trichter 33 ist an einem gerätefesten Träger 34 befestigt. Die ineinander verhakten Federn 1 fallen durch die Hohlwelle 10 in den durch die Flächen 2, 3 gebildeten Arbeitsspalt 6 zwischen die Reibbeläge 4, 5.

Die beiden Platten 7, 8 sind von einem den Arbeitsspalt 6 nach außen hin abdeckenden Sammel- und Ableitblech 35 für die vereinzelten Federn 1 umschlossen, dessen unterhalb der Platte 7 liegender Boden 36 eine Auswerföffnung im Bereich eines Förderbandes 37 hat, dessen eine Umlenkrolle mit 38 bezeichnet ist.

In Figur 1 ist der Arbeitsspalt 6 durch entsprechende Anordnung der Platten 7, 8 zur Horizontalen in Richtung der Förderbandes 37 geneigt. Dies erbringt den Vorteil, daß die Schwerkraft mithilft, die vereinzelten Federn 1 durch die Auswerföffnung des Sammel- und Ableitblechs 35 auf das Förderband 37 zu bringen. Abweichend hiervon könnten die Reibflächen 2, 3 und ihre Träger auch eine vertikale oder horizontale Stellung im Raum einnehmen.

Die Größe der durch die Feder 22 mitbestimmten Kraft, mit der die Reibfläche 3 auf die verwirrten Federn 1 drückt, richtet sich nach Stärke und Geometrie der Federn. Konische und schwache Federn werden mit geringen Kräften beaufschlagt, während zum Vereinzeln starker, zentrischer Federn entsprechend hohe Andruckkräfte benötigt werden. Es ist denkbar, zum Vereinzeln unterschiedlich starker Federn die Andruckkraft durch Einsatz unterschiedlich Andruckfedern 22 zu optimieren.

Die Relativbewegung der Reibflächen 2, 3 ist in Figur 1 ist dadurch erreicht, daß sich die Platten 7, 8 in entgegengesetzter Richtungen drehen, wobei die Drehachsen der Platten koaxial zueinander angeordnet sind. Abweichend hiervon könnte der Drehbewegung einer oder beider Platten eine die Vereinzelung der Federn 1 unterstützende Exzenterbewegung überlagert sein. Auch wäre es möglich, die Platten in gleicher Drehrichtung jedoch mit unterschiedlichen Winkelgeschwindigkeit umlaufen zu lassen. Außerdem kann die Relativbewegung der Platten stetig oder unstetig mit negativer oder positiver Beschleunigung erfolgen. Ferner könnte mindestens eine Reibfläche nur eine rein exzentrische Bewegung als alleinige Bewegung ausführen. Welche dieser genannten Bauarten im Einzelfall eingesetzt wird, hängt nicht zuletzt von der Außenkontur und der Stärke der zu entwirrenden Federn ab. Eine besonders einfache Bauart besteht darin, daß nur eine Platte 7 oder 8 drehbar und/oder entlang einer Exzenterbahn bewegbar angeordnet ist, während die andere Platte feststeht.

Anstelle von als Rotationskörper ausgebildeter Platten könnten als Träger der Reibflächen auch Platten verwendet werden, die translatorische Längs- und/oder Querbewegungen parallel zum Arbeitsspalt ausführen. Die Relativbewegung solcher Platten könnte gleichfalls stetig oder unstetig mit positiver oder negativer Beschleunigung erfolgen und könnte außerdem durch taktmäßige Hubbewegungen einer Platte ergänzt werden.

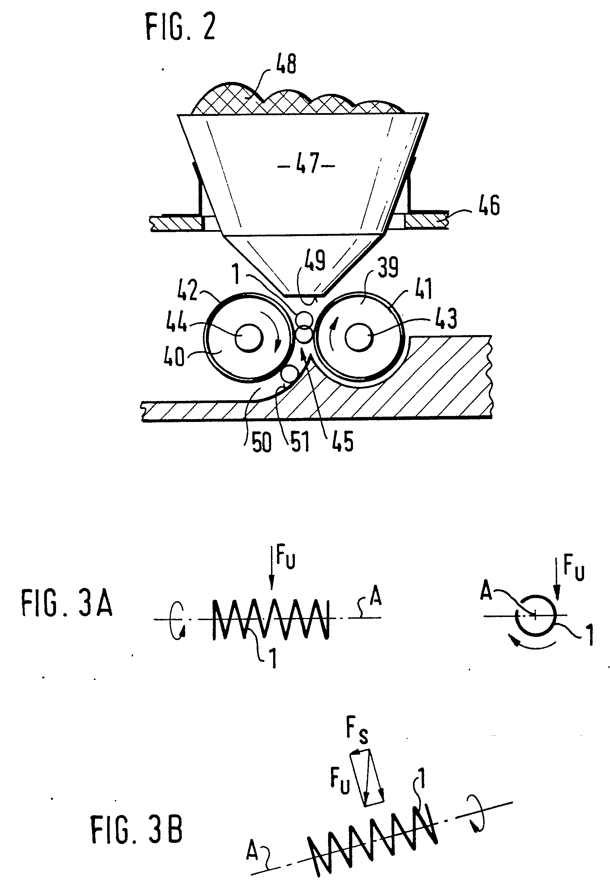

Eine Relativbewegung, dei zur Federvereinzelung führt, läßt sich nicht nur durch plane, sondern auch durch gekrümmte Reibflächen übertragen. Ein Ausführungsbeispiel einer solchen Vorrichtung ist in Figur 2 schematisch dargestellt. Zwei in entgegengesetzten Richtungen drehende zylindrische Walzen 39, 40 sind an ihrem Außenumfang mit je einem Reibbelag 41 bzw. 42 versehen. Die Walzen 39, 40 sitzen auf je einer Antriebswelle 43 bzw. 44, die parallel zueinander ausgerichtet sind.

Die durch die Reibbeläge 41, 42 gebildeten Zylinderflächen der Walzen haben einen vorgegebenen Abstand voneinander, welcher dem größten Außendurchmesser der zu vereinzelnden Federn entspricht und den Arbeitsspalt 45 der Vorrichtung bildet. Oberhalb der Walzen ist auf einem Träger 46 ein Bunker 47 befestigt, der einen Speicherraum für das zu entwirrende Teilehaufwerk 48 bildet. Der Träger 46 kann mit einer nicht gezeigten Vibratoreinrichtung gekoppelt sein, die den Bunker 47 in Schwingungen versetzt. Das zu entwirrende Gut tritt aus einer schmalen Öffnung 49 an der Unterseite des Bunkers so aus, daß es zwischen die beiden Walzen 41, 42 fällt. Nach Durchlaufen der Ar beitsspalts 45 gelangen die Federn 1 in einen Vereinzelungskanal 50, der vom Außenumfang der Walze 40 sowie von einer gerätefesten Fläche 51 gebildet wird und eine Fortsetzung des Arbeitsspalts 45 ist. Anstelle zweier Walzen können auch drei Walzen benutzt werden, deren Achsen die Eckpunkte eines gleichseitigen Dreiecks bilden.

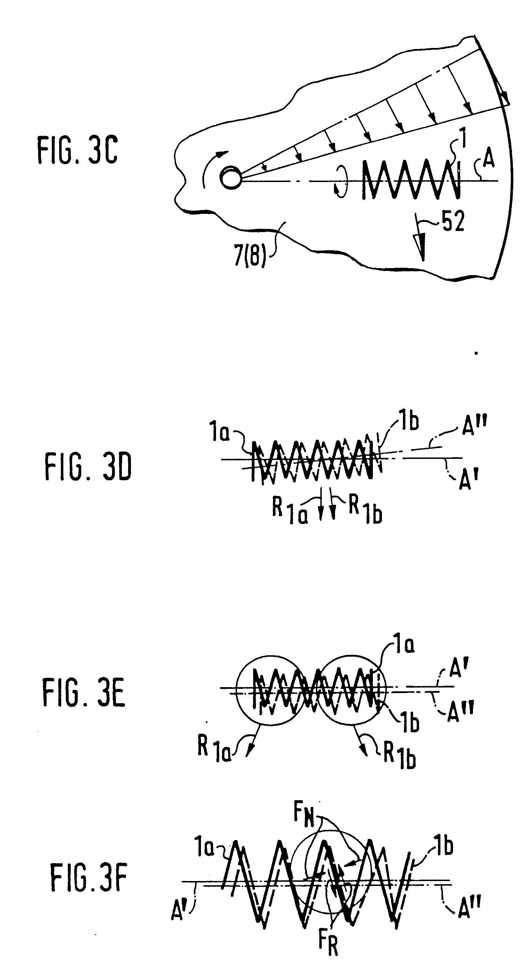

Die durch Haft- und Gleitreibung übertragenen Kräfte auf die Federn 1 bewirken bei bereits ausgerichteten Federn eine Wälzbewegung (Figur 3A). Wird die Umfangskraft $F_u$ nicht senkrecht zur Wälzachse A eingeleitet, entsteht durch Kraftschluß eine Seitenkomponenten $F_s$ (Figur 3B), die die Feder 1 in Rollrichtung ausrichten will. Dabei wird die Feder andauernd ver- und entspannt.

Bei rotierenden oder sich exzentrisch bewegenden Reibflächen müssen die Federn 1 ständig Seitenkräfte aufnehmen, da sich die Richtung der Umfangskraft immer ändert. Außerdem trägt die unterschiedliche Umfangsgeschwindigkeit der Reibflächen (abhängig von ihrem Radius) dazu bei, daß die einzelnen Windungen einer Feder 1 verschiedene Reibungsverhältnisse, d.h. unterschiedliche Kraftleitung, aufweisen. Das Ergebnis sind resultierende Kräfte, die den Federn jeweils eine bevorzugte, durch einen Pfeil 52 kenntlich gemachte Wälzrichtung geben.

Die Wälzrichtung von konischen Federn im Arbeitsspalt ist aufgrund ihrer Geometrie sehr instabil. Die Federn sind dadurch dauernden Seitenkräften schon bei rein translatorischen Relativbewegungen der Kontaktflächen ausgesetzt. Die Folge sind sich ständig ändernde Wälzrichtungen bei jeder Feder.

Ineinander gedrehte und verhakte Federn 1a, 1b werden aufgrund ihrer unterschiedlichen resultierenden Wälzrichtung auseinanderrollen. Die verschiedenen Richtungen ergeben sich bei parallelen Wälzachsen $A'$ bzw. $A''$ der Federn 1a, 1b durch die unterschiedliche Aufnahme von Seiten- und Umfangskräften (abhängig von den jeweiligen Auflageverhältnissen) je Windung und verwirrten Feder (Figur 3E) bzw. durch nicht parallele Wälzachsen $A'$ bzw. $A''$ der verwirrten Federn (Figur 3D). Die resultierenden Bewegungsrichtungen der Federn sind in den Figuren 3D und 3E durch je zwei Pfeile $R_{1a}$ und $R_{1b}$ angedeutet.

Die Seiten- und Umfangskräfte beim Wälzen sowie der Wälzvorgang selbst verspannen und verformen die verwirrten Federn derart, daß ineinandergeratene Windung sich zu trennen versuchen. Innerhalb der Wirrverbandes werden die Federn unterschiedlich verformt. Die Windungsabstände werden unregelmäßig. Zwischen den Windungen der verklemmten Federn treten erhöhte Reibungskräfte auf (Pfeile $F_N$ und $F_R$ in Figur 3F), deren Komponenten die Federn lockern und voneinander trennen. Der verspannte Bereich ist in Figur 3F von einem Kreis umschlossen. Das erneute Verwirren der Federn wird verhindert durch die unterschiedlichen Wälzrichtungen der vereinzelten Federn und durch den definierten Abstand der Reibflächen.

**Ansprüche**

1. Verfahren zum Vereinzeln von Wirrteilen, insbesondere von Schraubenfedern, deren Länge größer ist als ihr Durchmesser, dadurch gekennzeichnet, daß die Wirrteile in einen Arbeitsspalt (6 bzw. 45) eingebracht werden, welcher durch jeweils zwei einander gegenüberliegende und relativ zueinander bewegliche Flächen (2, 3 bzw. 41, 42) mit zumindest ähnlichen Oberflächeneigenschaften gebildet wird, deren Abstand voneinander durch den jeweils größten Außendurchmesser eines Einzelteils (1) vorgegeben ist, und daß die Relativbewegung der Flächen (2, 3 bzw. 41, 42) durch Haft- und Gleitreibung auf die Teile (1) übertragen wird und diese zu eine Vereinzelung herbeiführenden Wälzbewegungen veranlaßt.

2. Vorrichtung zur Durchführung des Verfahrens nach Anspruch 1, dadurch gekennzeichnet, daß der Arbeitsspalt (6) durch zwei planparallele Flächen (2, 3) gebildet wird, von denen mindestens eine in der Ebene des Arbeitsspaltes beweglich angeordnet ist.

3. Vorrichtung nach Anspruch 2, dadurch gekennzeichnet, daß die den Arbeitsspalt (6) begrenzenden Flächen (2, 3) an zwei relativ zueinander beweglichen, planparallelen Platten (7, 8) ausgebildet sind.

4. Vorrichtung nach Anspruch 3, dadurch gekennzeichnet, daß mindestens eine Platte (7 oder 8) als Rotationskörper ausgebildet ist.

5. Vorrichtung nach Anspruch 4, dadurch gekennzeichnet, daß der Drehbewegung der Rotationskörpers (7 bzw. 8) eine exzentrische Bewegung überlagert ist.

6. Vorrichtung nach einem der Ansprüche 3 bis 5, dadurch gekennzeichnet, daß beide Platten (7, 8) als gleichachsig oder exzentrisch zueinander angeordnete Rotationskörper mit unterschiedlicher Drehzahl und/oder entgegengesetzter Drehrichtung ausgebildet sind.

7. Vorrichtung nach Anspruch 3, dadurch gekennzeichnet, daß mindestens eine Platte als translatorische Längs- und Querbewegungen parallel zur Ebene des Arbeitsspalts (6) ausführender Körper ausgebildet ist.

8. Vorrichtung nach einem der Ansprüche 1 bis 7, dadurch gekennzeichnet, daß der Relativbewegung der Platten (7, 8) in der Ebene des Arbeitsspaltes (6) eine Hubbewegung mindestens einer Platte (8) quer zum Arbeitsspalt (6) überlagert ist.

9. Vorrichtung nach einem der Ansprüche 3 bis 8, dadurch gekennzeichnet, daß die Relativbewegung der Platten (7, 8) stetig oder unstetig mit negativer oder positiver Beschleunigung erfolgt.

10. Vorrichtung nach Anspruch 1, dadurch gekennzeichnet, daß der Arbeitsspalt durch gekrümmte, parallele Flächen von Rotationskörpern gebildet wird.

11. Vorrichtung nach Anspruch 10, dadurch gekennzeichnet, daß die Rotationskörper aus mindestens zwei parallelachsig gelagerten Walzen (39, 40) bestehen, deren Mantelflächen (41, 42) in einem der Breite des Arbeitsspaltes (45) entsprechenden Abstand voneinander angeordnet sind.

12. Vorrichtung nach Anspruch 1, dadurch gekennzeichnet, daß der Arbeitsspalt aus einer Planplatte und der Mantelfläche eines Kegels besteht, dessen achse zu der Achse der Planplatte geneigt ist.

FIG. 1

FIG. 2

FIG. 3A

FIG. 3B

FIG. 3C

FIG. 3D

FIG. 3E

FIG.3F

## EINSCHLÄGIGE DOKUMENTE

EP 88115104.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | FR - A - 366 418 (SÄCHSISCHE SCHRAUBEN & MÜTTERN-FABRIK) <br> * Gesamt * | 1,3 | B 65 G 47/14 |
| A | DE - B - 1 288 007 (GOETZEWERKE FRIEDRICH GOETZE AG) <br> * Anspruch 1; Fig. 1 * | 1 | |

RECHERCHIERTE SACHGEBIETE (Int. Cl.4)

B 65 G

Der vorliegende Recherchenbericht wurde für alle Patentansprüche erstellt.

| Recherchenort | Abschlußdatum der Recherche | Prüfer |
|---|---|---|
| WIEN | 11-01-1989 | PISSENBERGER |